**Europäisches Patentamt**

**European Patent Office**

**Office européen des brevets**

(19)

(11) Publication number : **0 308 503 B1**

(12) **EUROPEAN PATENT SPECIFICATION**

(45) Date of publication of patent specification :
20.05.92 Bulletin 92/21

(51) Int. Cl.$^5$ : **G01S 3/78**

(21) Application number : **88904728.8**

(22) Date of filing : **07.03.88**

(86) International application number :
**PCT/US88/00658**

(87) International publication number :
**WO 88/08141 20.10.88 Gazette 88/23**

(54) **TARGET TRACKING SYSTEMS.**

(30) Priority : **06.04.87 US 34355**

(43) Date of publication of application :
**29.03.89 Bulletin 89/13**

(45) Publication of the grant of the patent :
**20.05.92 Bulletin 92/21**

(84) Designated Contracting States :
**AT BE CH DE FR GB IT LI LU NL SE**

(56) References cited :
**FR-A- 2 392 394
US-A- 3 566 026
US-A- 3 652 790
US-A- 3 714 373
US-A- 3 730 277
US-A- 3 828 122
US-A- 4 409 661
Proceedings 1985 Carnahan Conference on
Security Technology, 15-17 May 1985 (Lexington, Kentucky, US), T.F. Jyu et al.:
"Aprogrammable window processor in a TV
tracking system", pages 163-169**

(73) Proprietor : **Hughes Aircraft Company
7200 Hughes Terrace P.O. Box 45066
Los Angeles, California 90045-0066 (US)**

(72) Inventor : **HIGA, Glenn, S.
20506 S. Vermont Avenue, No. 59
Torrance, CA 90502 (US)**
Inventor : **MAROTTA, Daniel, A.
4749 Norma Drive
San Diego, CA 92115 (US)**
Inventor : **PAPA, Gerard, J.
323 S. Broadway, Apt No. 6
Redondo Beach, CA 90277 (US)**

(74) Representative : **KUHNEN, WACKER &
PARTNER
Alois-Steinecker-Strasse 22 Postfach 1553
W-8050 Freising (DE)**

## Description

## BACKGROUND OF THE INVENTION

This invention was made with United States Government support under contract DAAK50-84-C-0024 awarded by the Department of the Army. That Government has certain rights in this invention.

The present invention relates to target tracking systems and, in particular, a method and apparatus for acquiring targets and for aim point adjustment in the acquiring of targets. While applicable for any type of electromagnetic energy, the specific use was formulated for infrared systems. Therefore, the following exposition shall be referenced thereto for illustrative purposes.

A typical system for acquiring a target is described, for example, in pages 22-63 through 22-87 of "The Infrared Handbook" (1978) by William A. Wolfe and George J. Zeiss, editors, prepared by The Infrared Information and Analysis (IRIA) Center, Environmental Research Institute of Michigan, for the Office of Naval Research, Department of the Navy, Washington, D.C. It comprises a microprocessor-controlled, forward-looking infrared (FLIR) system which is suitable for a variety of flight missions, such as day and night-time pilotage, navigation, target recognition, low-level flight, nap-of-the-earth flight, and search and rescue missions. The purpose is to provide image quality and horizon definition in all types of weather and over varied terrain. Such a system is useful in land and airborne vehicles.

Being microprocessor-controlled and software driven, the system automatically adjusts its FLIR sensor to operate at optimum settings for the environment. All flight symbology and navigation data are superimposed over FLIR imagery to provide centralized presentation on the display.

The several functions of the system are controllable in one of several ways. A controller incorporates several functions to comprise, in effect, a multifunction control unit operated by a pilot or copilot, and includes a track switch, among other controls, for enabling automatic and manual tracking of the target. The controller also has another switch to provide for different fields of view, typically narrow and wide, through an infrared sensor housed in a turret so that the operator may view the target on a cathode ray tube in a panel display unit. Other controls are available for additional functions including movement of the turret and its sensor to view targets.

In operation, the operator places the track switch in a track mode, that is, to track a target. While in this mode, the turret is manually moved about by a controller switch, which is manipulated by the operator's thumb on the multifunction control unit. A dashed trackgate, that is, one defined by corners, appears on the screen. The controller enables the trackgate to be positioned over the target. The trigger switch is then actuated to begin auto-tracking, that is, the target is tracked automatically by the system, and this change is represented on the screen by the dashed gate becoming solid on the screen.

When it is desired to track a new target, the track switch is depressed to change from an auto-track mode to a manual mode, and this change is represented visually on the screen as a dashed gate. The turret controller switch must then be manipulated to move the turret and sensor to view the new target. Because both the vehicle and the new target are both moving, the tracking of the new target is at least difficult. In one controlling configuration, the operator may use one hand to operate the vehicle and the other hand to operate the target tracking system. In such a configuration, the difficulties in tracking a target are further acerbated. At a minimum, after acquisition, the new target may not be totally contained within the trackgate and, to better capture the target within the trackgate, the operator must alternately move between the manual track mode and the auto-track mode with the possibility of losing the partially acquired new target.

From US-A-3 566 026 a system that acquires and tracks a target is known which utilizes a camera system, a servo system for adjusting the camera, a video tracker, and a camera system stabilization unit. The field of view of the camera system is displayed on a conventional TV monitor. Target tracking in this system is performed as follows: Initially, the TV camera is maintained along a preselected bore sight direction, e. g. in the direction of flight of an aircraft. If the operator identifies a desired target on the screen, he positiones a light pencil sensor over the target on the screen and actuates a control push button. In response to the pencil signal the control system provides data being representative of the target position relative to the monitor display. These signals were used to preposition the video tracker's tracking gates over the desired target. The output signals of the video tracker are processed in an inertial tracking loop to automatically align the TV camera's optical axis with the target line of sight in the case of a stationary target, or to offset the optical axis by an amount proportional to the target velocity in the case of a moving target.

However, also in this system, when it is desired to track a new target, the control push button on the light sensor assembly has to be pushed again to change the system from the autotrack mode in the non-tracking mode. Again, as mentioned above, the aquisition of a new target is difficult under such conditions especially if the aircraft is flying in e. g. narrow loops.

From prior art document FR-A-2 392 394 a tracking system is known for tracking two neighboring flying targets. The system comprises an image sensor, a servo system, a television display, a control circuit and control means in the form of a movable stick. The control circuit comprises first and second image evaluation systems, and first and second trackgate generators. The first trackgate is positionable at arbitrary positions on the screen by the afore mentioned movable stick. The second trackgate is positioned at a fixed position in the center of the television screen and is not movable. Tracking in this system is performed as follows: Initially, the first trackgate is positioned on a first target and the servo system automatically alignes the camera system to said first flying target in response to first deviation signals. Concurrently, the second trackgate is generated at the center of the screen so as to embrace the image of a second target. The second trackgate is arranged on the second target by moving the first trackgate encompassing the first target to a particular position on the screen being dependent on the geometrical relationship of the first target with respect to the second target. Thereafter, the second image elevation system produces second deviation signals corresponding to an image point located on the screen within the second track gate. After having positioned the second trackgate on the image of the second target the actual value of the control circuit is switched from the first deviation signal to the second deviation signal. In this way there is effectively avoided that between the tracking of the first flying target and the tracking of the second flying target there will be a time gap, namely, during the entire time that the operator otherwise would need in order to shift a single trackgate from the first flying target to a second flying target and to turn- off and again turn- on the automatic servo system.

However, in this system switching between tracking of different targets only is possible if the respective targets have a fixed geometrical relationship to each other (i.e. switching is possible between images of different parts of the same target or between images of targets which are flying in a fixed formation).

It would be therefore the object of the present invention to provide a method for acquiring targets and a pointing and tracking system wherein tracking and switching between independent targets is possible and wherein the operating performance is facilitated as compared to prior art devices.

This object is solved by a method in accordance with claim 1 and by an apparatus in accordance with claim 4.

In detail, the present invention addresses this problem by maintaining the pointing system stable and concurrently positioning the trackgate on a new target or more completely on a partially acquired target.

Specifically, the invention has the system remain in the auto-track mode so as to track an arbitrary target and, while doing so, permits a secondary trackgate to be manually positioned on the desired or new target. The primary advantage thereof is to facilitate acquisition of a new target within the trackgate, or better positioning of a partially acquired target within the trackgate, quickly and in a stable manner.

Other aims and advantages, as well as a more complete understanding of the present invention, will appear from the following explanation of exemplary embodiments and the accompanying drawings thereof.

## DESCRIPTION OF THE DRAWINGS

FIG. 1 is a view of the system of the present invention showing a multifunction control unit coupled to a turret/FLIR unit through system electronics, and a display of what is being viewed;
FIG. 2 is a front partial view of the multifunction control unit of FIG. 1;
FIGS. 3a-3c illustrate a method for acquiring a new target; and
FIG. 4a and 4b illustrate a method for aim point adjustment in acquiring a partially acquired target.

## DETAILED DESCRIPTION OF THE PREFERRED EMBODIMENTS

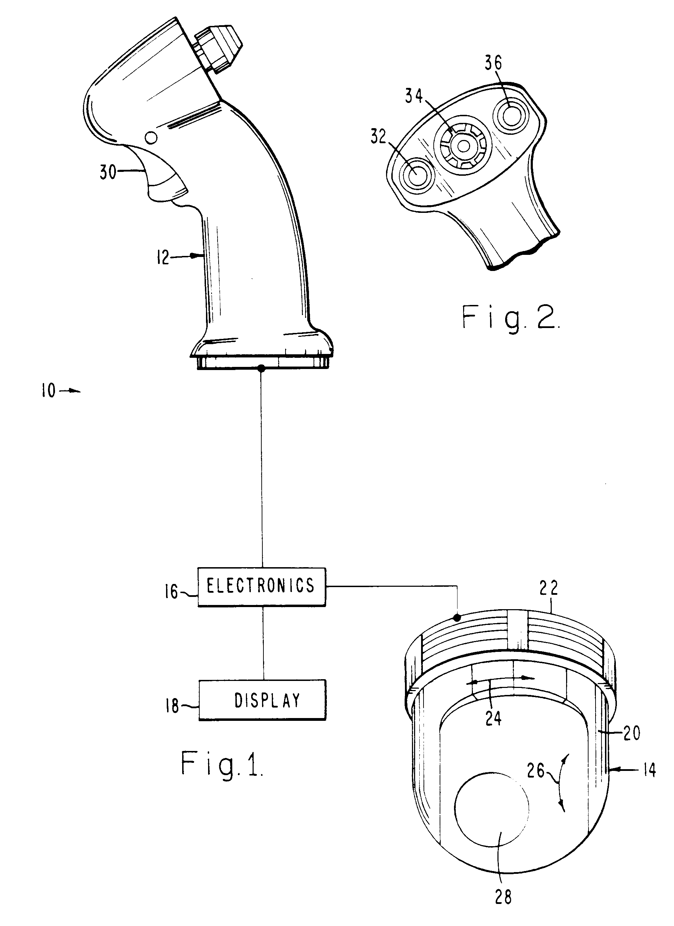

As shown in FIG. 1, a system 10 for viewing and tracking a target includes a multifunction control unit 12, a turret/FLIR unit 14, and electronics 16 coupling units 12 and 14 together. A display 18 is electronically coupled to electronics 16 for permitting an operator of unit 12 to view what is seen by the turret/FLIR unit.

A typical embodiment for turret/FLIR unit 14 is a two-axis gimbal FLIR sensor which collects and converts infrared radiation to a electronic signals processed by electronics 16. Line-of-sight of stabilization is provided for by an afocal infrared telescope. Conventionally, two fields of view are obtainahle. A wide field-of-view permits accurate checkpoint navigation, obstacle avoidance, and night pilotage. A narrow field-of-view permits recognition of small objects at long range.

More specifically, unit 14 is of conventional design and contains the optics, electronics, detectors, and cryogenic cooler necessary to collect and convert infrared radiation to electronic signals used for final video processing by electronics 16. A two-axis gimbal/turret is coupled to a vehicle, such as a helicopter, airplane or tank, by a base 22, and permits turret 20 to move in the direction denoted by doubled-headed arrow line 24 and double-headed arrow line 26. Gimbaled turret 20 houses a FLIR sensor, gyroscopes, resolvers, and gimbal torquers. The configuration of the turret permits the operator to direct the FLIR line of sight, which is at the center of the imaged scene acquired through a window 28, to any position within the field of regard.

Unit 14 contains a telescope which provides either low or high magnification. At low magnification, a wide field of view is displayed on display 18. The high magnification telescope for the narrow field of view provides for increased stabilization to permit degraded performance caused by line of sight jitter.

Electronics 16 typically includes a system electronics unit, a display electronics unit and a system control unit. It includes a signal processor such as described in copending patent application, Serial No. 656,382 filed 1 October 1984. The system electronics unit operates under microprocessor control and converts signals from turret/FLIR unit 14 to video signals, and provides avionics symbology, video processing, close-loop servo drive for unit 14, control operation, built-in test, system power forms and video distribution. The systems electronics unit includes a FLIR signal processor, symbol generator, turret electronics module, master control and built-in test, low voltage power supply and personality module, which is custom-tailored to provide specific avionics interface for installation of common systems in multiple aircraft configurations.

The display electronics unit provides power forms, deflection, built-in test functions, and video outputs for any combination of display options, in addition to separate video amplifier modules to permit control of brightness and contrast on separate displays.

The system control unit provides in the interface between the system electronics unit and multifunction control unit 12. It also contains a power conditioning and drive electronics for unit 12.

Display 18 includes a high voltage power supply, a cathode ray tube and controls therefor. It displays flight data, such as altitude, attitude, air speed and heading, which can be confirmed by the pilot or copilot scanning nearby conventional flight instruments. Its brightness can be adjusted for the time of day or night.

Multifunction control unit 12 is used for centralized control of the operation of the entire system. It performs several functions including manual pointing of the turret, changing from one field-of-view to another, selecting control functions from the control menu display page, adjusting the horizon reference line, setting the system into the auto track mode, placing the turret in the look-ahead position, and changing the polarity of the FLIR video imagery.

As shown in FIGS. 1 and 2, unit 12 includes a two position trigger switch 30, a four position selector switch 32, a force controller auto-track switch 34, and a look-ahead push buttom 36.

Switch 32 permits a change in field-of-view, FLIR polarity and auto-track adjustments among other functions. Force controller switch 34 either enables auto-track, that is automatic tracking of a target, or changes the auto-track into a manual operation. Controller 34 also enables turret 20 of unit 14 to be manually positioned.

One method of operation is illustrated in FIGS. 3a-3d. These figures illustrate a screen 38 of display 18 on which is shown trackgates and targets. A trackgate is the area in the field-of-view in which the tracking system is concerned and is typically configured as a rectangle of adjustable size, respectively as a primary trackgate 40 shown in solid line and a secondary trackgate 42, shown by four corners of a rectangle. Typically, also, the track-gates are the same size, although they need not be. A first target is denoted by indicium 44 and a second target is denoted by indicium 46.

As shown, as is conventional with target tracking systems, a trackgate is employed as a point of focus and usually surrounds the target. During the acquisition period, the operator searches the field-of-view for a target. The operator controls the motion of the pointing system with force controller 34. It is during this period where it becomes difficult to properly position the trackgate on the target because, as explained above, the difficulty arises during flight when aircraft motion impedes the ability of the operator to position the trackgate properly. It is also very difficult to simultaneously position the trackgate with controller 34 and activate tracking with switch 30. However, while the pointing system is tracking a target, it is quite stable.

Therefore, the invention utilizes this characteristic of stability while the pointing system is tracking a target. This is shown in FIG. 3a where a first target 44 is being tracked by primary trackgate 40. This target 44 need not be a previously acquired target; it can be any target whose use solely is to enable the system to remain stable. It is, however, desired to acquire a particular target, denoted as a new or desired second target 46. Therefore, in accordance with the teachings of the present invention, second trackgate 42 is newly used. When the operator initiates track, secondary trackgate 42 appears and may be positioned anywhere in the field-of-view, for example, shown in FIG. 3a as being coincident with primary trackgate 40. Secondary trackgate 42 is not linked to the positioning system and, therefore, it may move freely in the field-of-view while the pointing system is tracking first target 44. Because of the stability afforded by the tracking of first target 44, the secondary trackgate is immune to the unstable movements associated with the primary trackgate. The secondary trackgate is positioned by using force controller 34.

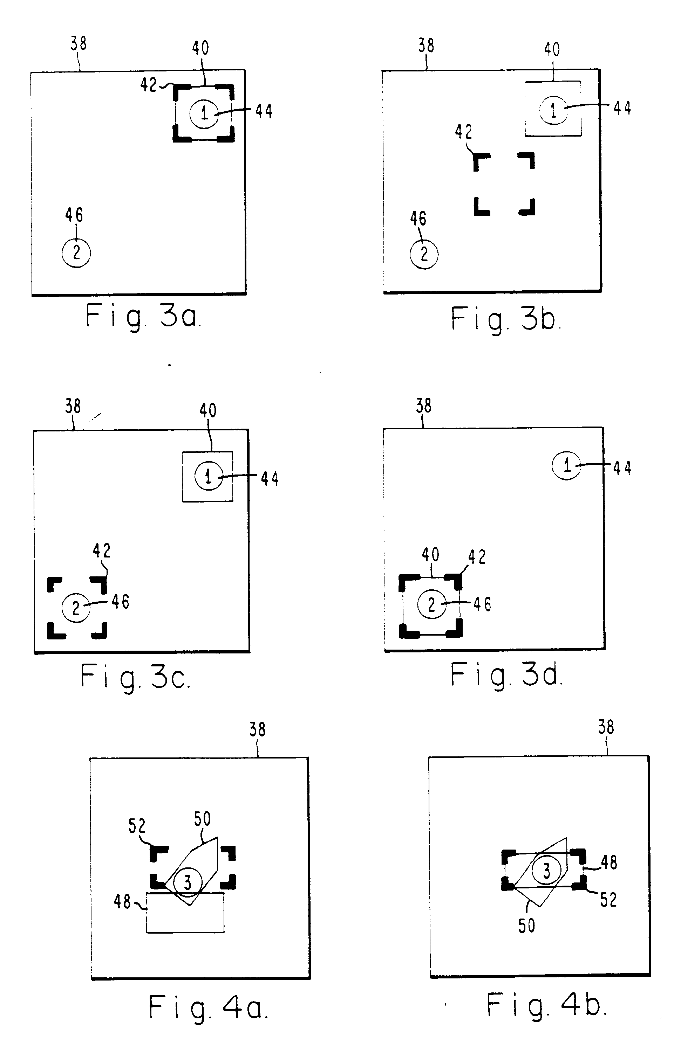

The secondary trackgate may, at any time, assume primacy in the tracking process so that it may be repositioned, or new target may be selected. For the tracking of a new target, as depicted in FIGS. 3a-3d, while primary trackgate 40 is tracking first target 44, secondary trackgate is moved across the field-of-view as shown in FIG. 3b until it encompasses second target 46, as shown in FIG. 3c. Secondary trackgate 42 is then permitted to assume the tracking process by pressing trigger switch 30 and maintains the system stable, while primary trackgate 40 is released from its tracking of target 44. The primary trackgate is then moved over to second target 46, as illustrated in FIG. 3d. During this transition, the system remains stable because secondary trackgate is now tracking second target 46. Primary trackgate 40 may then be permitted to assume control of the system from the secondary trackgate when both are positioned in coincidence over the second target.

In another embodiment of the present invention, it may be desired to reposition a trackgate on a partially acquired target. This sequence is illustrated with respect to FIGS. 4a and 4b. In FIG. 4a, a trackgate 48 is shown to have captured a small portion of a desired target 50. Formerly, prior to the present invention, to obtain a better positioning of the trackgate with respect target 50, it would be necessary to switch from a autotrack mode to a manual track and, in so doing, the target may be lost. Using the concepts of the present invention, however, it is possible to maintain stability by placing a secondary trackgate 52 in the desired position over the target in a manner similarly explained above, and then move primary trackgate 48 to the position defined by the secondary trackgate, as shown in FIGS. 4b.

## Claims

1. In a pointing and tracking system (10), a method for acquiring a desired target, said method comprising the steps of:

generating a first trackgate means (40) for encompassing a first target (44);

acquiring said first target (44) with said first trackgate means (40) so that it encompasses said first target (44);

setting the system (10) in an auto tracking mode so as to automatically track the first target (44) to maintain stability of the system;

concurrently generating a second trackgate means (42) for encompassing a second target (46) and acquiring said second target (46);

switching said system (10) so as to automatically track said second target (46); characterized in that

said second target (46) is acquired by manually moving said second trackgate means (42) until it encompasses said second target (46); and wherein said first target (44) is an arbitrary target and said second target (46) is said desired target.

2. A method according to claim 1 in which acquiring said first and second targets comprises the step of an aim point adjustment of the system (10).

3. A method according to claim 2 in which said aim point adjustment step comprises the steps of maintaining acquisition of a portion of the second target (46) and acquiring a greater portion of said second target (46).

4. A pointing and tracking system (10) for acquiring a desired target (46), comprising:

control means (16) for generating a first trackgate means (40) for encompassing a first target (44);

target acquisition means (16; 34) for acquiring said first target (44) with said first trackgate means (40) so that it encompasses said first target (44);

switching means (30) for setting the system (10) in an auto tracking mode for automatically tracking the first target (44) to maintain stability of the system;

wherein said control means (16) concurrently generates a second trackgate means (42) for encompassing a second target (46), and said target acquisition means (34) acquires said second target (46), and

said switching means (30) switches said system (10) so as to automatically track said second target (46), characterized in that

said second target (46) is acquired by manually moving said second trackgate means (42) until it encompasses said second target (46) and in that

said first target (44) is an arbitrary target and said second target (46) is said desired target.

5. The system of claim 4 wherein said target acquisition means (34; 16) comprises means for an aim point adjustment of the system (46).

6. The system of claim 5, wherein said aim point adjustment means (16) are provided for maintaining acquisition of a portion of the second target (46) and acquiring a greater portion of said second target (46).

## Patentansprüche

1. In einem Ziel- und Verfolgungssystem (10), ein Verfahren zur Aufnahme eines gewünschten Zieles, wobei das Verfahren die Schritte beinhaltet:

Erzeugen einer ersten Track-Gattervorrichtung (40) zum Umfassen eines ersten Zieles (44);

Aufnehmen des ersten Zieles (44) mit der ersten Track-Gattervorrichtung (40), so daß es das erste Ziel (44) umfaßt;

Setzen des Systemes (10) in einen Auto-Tracking-Zustand, so daß es das erste Ziel (44) automatisch verfolgt, um die Stabilität des Systemes aufrechtzuerhalten;

gleichzeitiges Erzeugen einer zweiten Track-Gattervorrichtung (42) zum Umfassen eines zweiten Zieles (46) und zum Aufnehmen des zweiten Zieles (46);

Schalten des Systemes, so daß das zweite Ziel (46) automatisch verfolgt wird; dadurch gekennzeichnet, daß

das zweite Ziel (46) aufgenommen wird, indem die zweite Track-Gattervorrichtung (42) manuell bewegt wird, bis sie das zweite Ziel (46) umfaßt; und daß das erste Ziel (44) ein beliebiges Ziel und das zweite Ziel (46) das gewünschte Ziel ist.

2. Verfahren nach Anspruch 1, in dem das Aufnehmen des ersten und des zweiten Zieles den Schritt einer Zielpunktjustage des Systemes aufweist.

3. Verfahren nach Anspruch 2, indem der Zielpunktjustageschritt die Schritte des Aufrechterhaltens der Aufnahme eines Teiles des zweiten Zieles (46) und Aufnehmen eines größeren Teiles des zweiten Zieles (46) aufweist.

4. Ziel- und Verfolgungssystem (10) für die Aufnahme eines gewünschten Zieles (46), mit:

Steuervorrichtungen (16) zum Erzeugen einer ersten Track-Gattervorrichtung (40), zum Umfassen eines ersten Zieles (44);

Zielaufnahmevorrichtungen (16; 34) zum Aufnehmen des ersten Zieles (44) mit der ersten Track-Gattervorrichtung (40), so daß sie das erste Ziel (44) umfaßt;

Schaltungsvorrichtungen (30) zum Setzen des Systemes (10) in einen Auto-Trackingzustand, zum automatischen Verfolgen des ersten Zieles (44), um die Stabilität des Systemes aufrechtzuerhalten; wobei die Steuervorrichtungen (16) gleichzeitig eine zweite Track-Gattervorrichtung (42) erzeugen, zum Umfassen eines zweiten Zieles (46), und wobei die Zielaufnahmevorrichtung (34) das zweite Ziel (46) aufnimmt, und

die Schaltungsvorrichtungen (30) das System (10) schalten, so daß das zweite Ziel (46) automatisch verfolgt wird; dadurch gekennzeichnet, daß

das zweite Ziel (46) aufgenommen wird, indem die zweite Track-Gattervorrichtung (42) manuell bewegt wird, bevor sie das zweite Ziel (46) umfaßt, und daß

das erste Ziel (44) ein beliebiges Ziel ist und das zweite Ziel (46) das gewünschte Ziel ist.

5. System nach Anspruch 4, worin die Zielaufnahmevorrichtungen (34; 16) Vorrichtungen für eine Zielpunktjustage des Systemes (46) aufweisen.

6. System nach Anspruch 5, worin die Zielpunktjustagevorrichtungen (16) bereitgestellt sind, um die Aufnahme eines Teiles des zweiten Zieles (46) aufrechtzuerhalten und um einen größeren Teil des zweiten Zieles (46) aufzunehmen.

## Revendications

1. Dans un système (10) de pointage et de poursuite, un procédé pour saisir une cible souhaitée, ledit procédé comprenant les étapes qui consistent :

à générer un premier moyen à cadre de poursuite (40) destiné à entourer une première cible (44) ;

à saisir ladite première cible (44) avec ledit premier moyen à cadre de poursuite (40) afin qu'il entoure ladite première cible (44) ;

à établir le système (10) dans un mode de poursuite automatique afin de poursuivre automatiquement la première cible (44) pour maintenir la stabilité du système ;

à générer simultanément un second moyen à cadre de poursuite (42) pour entourer une seconde cible (46) et saisir ladite seconde cible (46) ;

à commuter ledit système (10) afin de poursuivre automatiquement ladite seconde cible (46) ; caractérisé en ce que

ladite seconde cible (46) est saisie par un déplacement manuel dudit second moyen à cadre de poursuite (42) jusqu'à ce qu'il entoure ladite seconde cible (46) ; et dans lequel

ladite première cible (44) est une cible arbitraire et ladite seconde cible (46) est ladite cible souhaitée.

2. Procédé selon la revendication 1, dans lequel la saisie desdites première et seconde cibles comprend l'étape de réglage d'un point de visée du système (10).

3. Procédé selon la revendication 2, dans lequel ladite étape de réglage du point de visée comprend les étapes consistant à maintenir la saisie d'une partie de la seconde cible (46) et à saisir une plus grande partie de ladite seconde cible (46).

4. Système (10) de pointage et de poursuite pour saisir une cible souhaitée (46), comportant :

des moyens de commande (16) destinés à générer un premier moyen à cadre de poursuite (40) pour entourer une première cible (44) ;

des moyens (16 ; 34) de saisie de cible destinés à saisir ladite première cible (44) avec ledit premier moyen à cadre de poursuite (40) afin qu'il entoure ladite première cible (44) ;

des moyens de commutation (30) pour établir le système (10) dans un mode de poursuite automatique pour poursuivre automatiquement la première cible (44) afin de maintenir la stabilité du système ;

dans lequel lesdits moyens de commande (16) génèrent en même temps un second moyen à cadre de poursuite (42) pour entourer une seconde cible (46), et lesdits moyens (34) de saisie de cible saisissent ladite seconde cible (46), et

lesdits moyens de commutation (30) commutent ledit système (10) afin de poursuivre automatiquement ladite seconde cible (46), caractérisé en ce que

ladite seconde dible (46) est saisie par un déplacement manuel dudit second moyen à cadre de poursuite (42) jusqu'à ce qu'il entoure ladite seconde cible (46) et en ce que

ladite première cible (44) est une cible arbitraire et ladite seconde cible (46) est ladite cible souhaitée.

5. Système selon la revendication 4, dans lequel lesdits moyens (34 ; 16) de saisie de cible comprennent des moyens destinés à un réglage de point de visée du système (46).

6. Système selon la revendication 5, dans lequel lesdits moyens (16) de réglage de point de visée sont prévus pour maintenir la saisie d'une partie de la seconde cible (46) et saisir une plus grande partie de ladite seconde cible (46).

36

34

32

12

30

Fig.2.

10 →

16 — ELECTRONICS

18 — DISPLAY

Fig.1.

22

24

20

26

14

28

Fig. 3a.

Fig. 3b.

Fig. 3c.

Fig. 3d.

Fig. 4a.

Fig. 4b.

9